# EUROPÄISCHE PATENTSCHRIFT

(11) **EP 1 927 179 B1**
(45) Veröffentlichungstag und Bekanntmachung des Hinweises auf die Patenterteilung: **07.05.2014**
(21) Anmeldenummer: 06793048.7
(22) Anmeldetag: 29.08.2006
(51) Int. Cl.: H02K 37/04, H02K 1/24

(54) **RELUKTANZMOTOR**
RELUCTANCE MOTOR
MOTEUR A RELUCTANCE

(30) Priorität: 23.09.2005 DE 102005045546
(43) Veröffentlichungstag der Anmeldung: 04.06.2008
(73) Patentinhaber: Vorwerk & Co. Interholding GmbH, 42275 Wuppertal (DE)
(72) Erfinder: CALDEWEY, Uwe, 44229 Dortmund (DE)
(74) Vertreter: Müller, Enno
(86) Internationale Anmeldenummer: PCT/EP2006/065762
(87) Internationale Veröffentlichungsnummer: WO 2007/033886

(56) Entgegenhaltungen:
- EP-A- 0 455 578
- WO-A-85/02951
- WO-A-90/09700
- WO-A-02/097954
- WO-A-2005/020411
- GB-A- 2 294 161
- US-A- 3 679 953

## Beschreibung

Die Erfindung betrifft einen Reluktanzmotor nach den Merkmalen des Oberbegriffes des Anspruches 1.

Reluktanzmotoren sind bekannt. Insbesondere bei schnelllaufenden Reluktanzmotoren ist zur Erzielung einer Vorzugsdrehrichtung in der Außenkontur ein stufenartiger Übergang, ein sogenannter stepped air-gap ausgeformt. Eine solche Stufe weist hierbei ein Radialmaß von wenigen µm auf. So bspw. ein Maß zwischen 10 und 80 µm, weiter bspw. 50 µm.

Aus der US 3,679,953 A ist ein Reluktanzmotor bekannt, dessen Rotor in zwei Segmente unterteilt ist, die jeweils ausgehend von einem stufenförmigen Übergang eine spiralförmige Kontur aufweisen. Hiermit lässt sich eine Vorzugsdrehrichtung des Motors erreichen. Zu diesem Zweck ist es aus der EP 0 455 578 A2 auch bekannt, die Rotorkontur eines solchen Motors mit zwei unterschiedlich langen Umfangsabschnitten, bei jeweils kreisförmiger Kontur, auszubilden, wobei die Abschnitte über einen Stufenabschnitt ineinander übergehen.

Ausgehend von dem zunächst genannten Stand der Technik beschäftigt sich die Erfindung mit der Aufgabenstellung, einen Reluktanzmotor anzugeben, der ein gewünschtes Anlaufverhalten möglichst günstig im Hinblick auf ein zur Verfügung stehendes Drehmoment durchführen lässt.

Diese Aufgabe ist beim Gegenstand des Anspruches 1 gelöst, wobei darauf abgestellt ist, dass die Außenkontur durch den stufenförmigen Übergang in einen größeren und einen kleineren Abschnitt unterteilt ist, dass der größere Abschnitt in seiner Kontur spiralförmig verläuft und der kleinere kreisförmig, und dass die Stufe ein Radialmaß im Bereich von 10 bis 80 µm aufweist.

Das Anlaufverhalten des Rotors ist hierdurch sichergestellt, auch dann, wenn zum Anlaufen kein hohes Drehmoment erforderlich ist. Dies ist bspw. bei Staubsaugern bzw. beim Betrieb eines Lüfters der Fall. Durch die spiralförmige Außenkontur kann der Rotor etwas weiter gedreht werden als dies mit Bezug auf eine Phase normalerweise möglich ist. Dies stellt den Anlauf sicher. Zur Anpassung an ein ggf. höheres Anlaufmoment kann die Radiusreduzierung in der Spirale vergrößert werden.

Hinsichtlich der Unterteilung in einen kleineren und einen größeren Abschnitt durch den stufenförmigen Übergang kann der kleine Abschnitt etwa ein Sechstel bis ein Drittel des Umfangsabschnitts eines Rotorpols betragen. Der in der Kontur spiralförmig verlaufende größere Abschnitt kann weiter bevorzugt über zwei Drittel bis fünf Sechstel des Umfangsabschnitts eines Rotorpols sich erstrecken. Der mit kreislinienabschnittsförmiger Außenkontur verlaufende kleinere Abschnitt ist durch eine von der Rotorachse ausgehende Radiuslinie gebildet.

Als besonders vorteilhaft erweist sich eine Ausgestaltung, bei welcher ein Radius der Kontur sich ausgehend von dem stufenartigen Übergang vergrößert. Hierbei erweist es sich als vorteilhaft, wenn die Radiusdifferenz des spiralförmigen Abschnitts zwischen einem Viertel und drei Viertel des stufenartigen Übergangs zuzüglich des Differenzradiusmaßes liegt. Die Radiusdifferenz liegt demzufolge entsprechend zwischen einem Viertel und drei Viertel des maximalen Radiusmaßes im spiralförmigen Abschnitt. Bevorzugt wird diesbezüglich, dass die Radiusdifferenz einem Zehntel bis dem Doppelten des Maßes des stufenartigen Übergangs entspricht. So liegt weiter bevorzugt das Radiusmaß im Bereich von 20 bis 100 µm, bevorzugt 50 µm. Die spiralförmige Radialmaßänderung umfasst im Sinne der Erfindung auch bspw. eine stufenförmige Veränderung anstelle einer kontinuierlichen oder auch eine nicht lineare Radialmaßänderung im Zuge des Spiralverlaufs. Durch die erfindungsgemäße Ausgestaltung ist ein Reluktanzmotor, insbesondere ein schnelllaufender zweiphasiger Reluktanzmotor, mit spezieller Rotorgeometrie geschaffen, wobei der Rotor bzw. dessen Rotorpole im Bereich der gekrümmten Außenkontur sowohl einen stufenartigen Übergang (stepped air-gap) als auch einen hiervon ausgehenden spiralförmigen Verlauf aufweisen. In der Gegenüberstellungsposition von Statorpol und Rotorpol ist der Luftspalt zufolge vorliegender Erfindung an der Stelle größter radialer Erstreckung der Spirale verringert, was eine wirksame partielle Verkürzung der Feldlinien zwischen Stator und Rotor zur Folge hat.

Nachstehend ist die Erfindung anhand der beigefügten Zeichnung, welche lediglich zwei Ausführungsbeispiele darstellt, näher erläutert. Es zeigt:
- Fig. 1: in perspektivischer Darstellung einen Rotor eines Reluktanzmotors mit zuzuordnender Rotorwelle sowie einem Gehäuselagerteil, den Rotor in einer ersten Ausführungsform darstellend;
- Fig. 2: eine der Fig. 1 entsprechende perspektivische Darstellung, jedoch eine zweite Ausführungsform des Rotors betreffend;
- Fig. 3: in einer Einzeldarstellung ein Rotorblech des Rotors gemäß der Ausführungsform in Fig. 2 in Ansicht;
- Fig. 4: die Draufsicht auf den aus einzelnen Rotorblechen zusammengesetzten Rotor mit Blick auf einen Rotorpol;
- Fig. 5: in einer schematischen Darstellung einen 2-phasigen Motor.

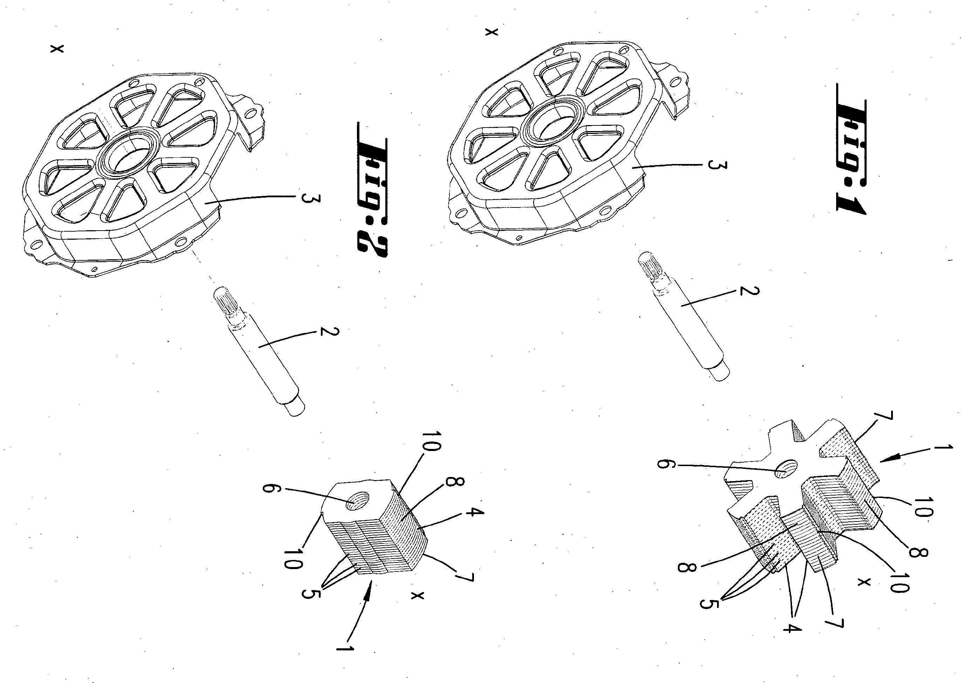

In den Figuren 1 und 2 sind in zwei Ausführungsformen Rotoren 1 für jeweils einen Reluktanzmotor dargestellt. Diese Rotoren 1 sind drehfest auf einer Rotorwelle 2 halterbar, welch letztere wiederum gelagert ist in einem Motorgehäuseteil 3. Die Rotorwelle 2 bildet zugleich die Rotordrehachse x.

Während in der Figur 1 der Rotor 1 sechspolig ausgebildet ist und entsprechend sechs Rotorpole 4 aufweist, die über dem Umfang gleichmäßig verteilt als radial abragende Abschnitte ausgeformt sind, besitzt der Rotor 1 in der in der Figur 2 dargestellten zweiten Ausführungsform lediglich zwei sich gegenberliegende Rotorpole 4.

Die Rotoren 1 sind in üblicher Weise zusammengesetzt aus einzelnen Rotorblechen 5, welche bspw. als Blechteile ausgestanzt sind. Eine mittige Bohrung 6 dient zur form- bzw. kraftschlüssigen Aufnahme der Rotorwelle 2.

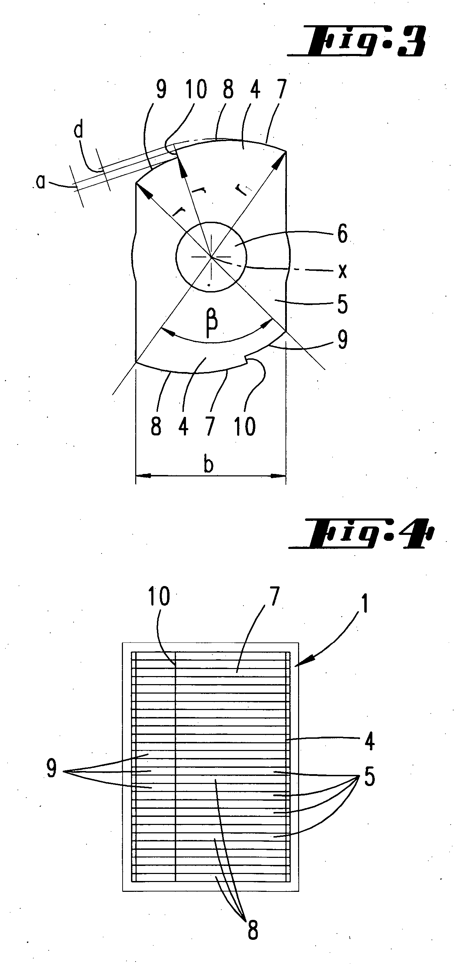

Ein Rotorblech 5 für einen Rotor 1 gemäß der zweiten Ausführungsform ist in Figur 3 in einer Einzeldarstellung in Ansicht gezeigt. Es ist zu erkennen, dass zunächst jeder Rotorpol 4 eine gekrümmte Außenkontur 7 aufweist. Diese setzt sich über das Umfangsmaß aus einem größeren Abschnitt 8 und einem kleineren Abschnitt 9 zusammen, wobei die Unterteilung zwischen größerem Abschnitt 8 und kleinerem Abschnitt 9 durch einen stufenartigen Übergang 10 gebildet ist.

Der kleinere Abschnitt 9 erstreckt sich etwa über ein Drittel des gesamten Erstreckungsmaßes der gekrümmten Außenkontur 7. Mit Bezug auf die Darstellung in Figur 3 beginnt dieser kleinere Abschnitt 9 mit dem linken Ende der gekrümmten Außenkontur 7 und erstreckt sich in Uhrzeigerrichtung kreislinienförmig bis zum stufenartigen Übergang 10. Über diesem gesamten kleineren Abschnitt 9 erstreckt sich die Außenkontur über einen gleichbleibenden Radius r, welcher sich auf die Rotorachse x bezieht.

Der stufenartige Übergang 10 erstreckt sich in Radialrichtung über die Außenkontur des kleineren Konturabschnittes 9 hinaus. Es ist hierbei ein radiales Überstandsmaß a des stufenartigen Übergangs 10 von etwa 50 µm gewählt.

Von dem radial äußeren Ende des stufenartigen Übergangs 10 erstreckt sich in Uhrzeigerrichtung der größere Abschnitt 8 der gekrümmten Außenkontur, dies mit ansteigendem Radius. Entsprechend verläuft der größere Abschnitt 8 spiralförmig sich zum dem stufenartigen Übergang 10 abgewandten Ende der Außenkontur 7 vergrößernd. An diesem, dem stufenartigen Übergang 10 abgewandten Ende weist der größere Abschnitt 8 einen Radius r₁ auf, welcher größer ist als die Summe des Radius r im Bereich des kleineren Abschnitts 9 plus dem Radialmaß a des stufenartigen Übergangs 10.

In Figur 3 ist in strichpunktierter Linienart eine gleichbleibende Außenkonturlinie mit einem Radius r₁ dargestellt, ausgehend von dem dem stufenartigen Übergang 10 abgewandten Ende des größeren Abschnitts 8. Die hieraus resultierende Radiusdifferenz d - gemessen in radialer Verlängerung zum Stufenmaß a - beträgt in der dargestellten Ausführungsform etwa dem Stufenmaß a, also etwa 50µpm.

Der gegenüberliegende Rotorpol 4 ist entsprechend außenkonturmäßig geformt.

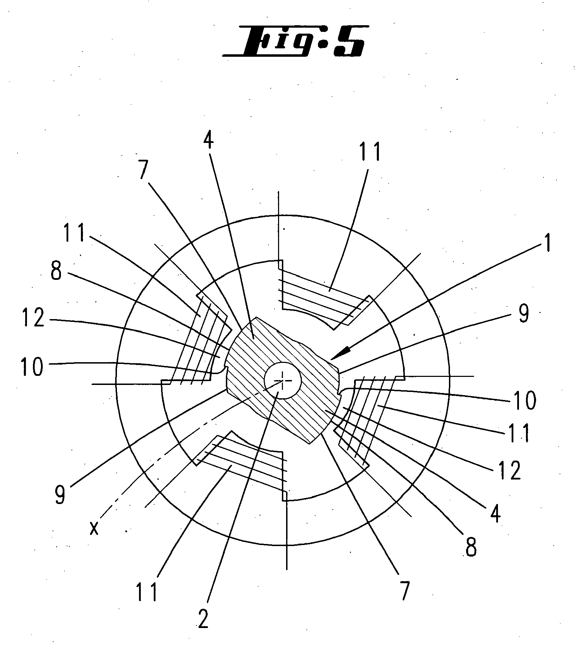

Zufolge der beschriebenen Rotorpolausgestaltung, insbesondere der Konturgestaltung der Rotorpole 4 ist ein verbessertes Anlaufverhalten des Rotors 1 in einem Reluktanzmotor erreicht. Neben dem bekannten stufenförmigen Übergang 10 ist im Bereich zwischen dem Rotorpol 4 und dem im Betrieb hierzu korrespondierenden Statorpol 11 ein spiralförmiger Luftspalt 12 ausgebildet (vgl. Fig. 5). Das zum Radialmaß des Rotors proportionale Anlaufmoment verliert sich nicht in den kritischen Drehwinkeln 0°, 90°, 180° oder 270°. Es bleibt vielmehr ein Drehmoment bestehen, das zu einem sicheren Anlaufen auch aus diesen Stellungen heraus ausreichend ist.

Bei einem wie in Fig. 5 schematisch dargestellten 2-phasigen Motor mit vier Statorpolen 11 und zwei Rotorpolen 4 sind die Rotorpole 4 einschließlich des kleineren Konturabschnitts (9) - stepped air-gap - anhand eines Winkels β in ihrer radialen Breite b ausgelegt. Dieser Winkel β ist, ausgehend von der Rotor-Mittelachse x, über beide äußere Enden eines Rotorpols 4 gebildet und beträgt zwischen 85° und 95°, bevorzugt 90°. Bei gleichmäßiger umfangsmäßiger Statorpol-/Freiraumverteilung ergibt sich hieraus eine gegenüber einem Statorpol 11 vergrößerte Breite b eines Rotorpols 4.

## Patentansprüche

1. Reluktanzmotor mit einem Rotor (1) und einem Stator, wobei der Rotor (1) einzelne Rotorpole (4) aufweist und die Rotorpole (4) eine gekrümmte, spiralförmig verlaufende Außenkontur besitzen, wobei weiter in der Außenkontur ein stufenartiger Übergang (10) ausgebildet ist, zur Erzielung einer Vorzugsdrehrichtung beim Anlaufen des Motors, **dadurch gekennzeichnet, dass** die Außenkontur (7) durch den stufenartigen Übergang (10) in einen größeren (8) und einen kleineren Abschnitt (9) unterteilt ist, dass der größere Abschnitt (8) in seiner Kontur spiralförmig verläuft und der kleinere kreisförmig mit einer von der Rotorachse ausgehenden Radiuslinie, und dass die Stufe ein Radialmaß im Bereich von 10 bis 80 µm aufweist.

2. Reluktanzmotor nach Anspruch 1, **dadurch gekennzeichnet, dass** ein Radius (r₁) der Kontur sich ausgehend von dem stufenartigen Übergang (10) vergrößert.

3. Reluktanzmotor nach einem der Ansprüche 1 oder 2, **dadurch gekennzeichnet, dass** die Radiusdifferenz (d) des spiralförmigen Abschnitts (8) zwischen einem Viertel und drei Viertel des stufenartigen Übergangs (10) zuzüglich des Differenzradiusmaßes (d) liegt.

4. Reluktanzmotor nach einem der Ansprüche 1 oder 2, **dadurch gekennzeichnet, dass** die Radiusdifferenz (d) einem Zehntel bis dem Doppelten des Maßes (a) des stufenartigen Übergangs (10) entspricht.

## Claims

1. Reluctance motor comprising a rotor (1) and a stator, the rotor (1) having individual rotor poles (4) and the rotor poles (4) having a curved outer contour extending in a spiral, a step-like transition (10) further being formed in the outer contour, for achieving a preferred direction of rotation when the motor starts, **characterised in that** the outer contour (7) is divided into a relatively large portion (8) and a relatively small portion (9) by the step-like transition (10), **in that** the contour of the relatively large portion (8) extends in a spiral and that of the relatively small portion extends in a circular manner and has a radius line proceeding from the rotor shaft, and **in that** the step has a radial dimension in the range of from 10 to 80 µ.

2. Reluctance motor according to claim 1, **characterised in that** the radius (r₁) of the contour increases proceeding from the step-like transition (10).

3. Reluctance motor according to either claim 1 or claim 2, **characterised in that** the difference (d) in the radius of the spiral portion (8) is between one quarter and three quarters of the step-like transition (10) plus the radial dimension difference (d).

4. Reluctance motor according to either claim 1 or claim 2, **characterised in that** the difference (d) in the radius corresponds to from one tenth to double the dimension (a) of the step-like transition (10).

## Revendications

1. Moteur à réluctance avec un rotor (1) et un stator, dans lequel le rotor (1) comporte des pôles de rotor individuels (4) et les pôles du rotor (4) ont un contour extérieur incurvé s'étendant en forme de spirale, dans lequel en outre est formé dans le contour extérieur une transition en forme de marche (10) pour obtenir une direction préférentielle de rotation au cours du démarrage du moteur, **caractérisé en ce que** le contour extérieur (7) est divisé par la transition en forme de marche (10) en une section plus grande (8) et une section plus petite (9), que le contour de la section plus grande (8) s'étend en forme de spirale et celui de la plus petite en forme de cercle avec une ligne de rayon s'étendant à partir de l'axe du rotor et que la marche présente une dimension radiale dans l'intervalle de 10 à 80 µm.

2. Moteur à réluctance selon la revendication 1, **caractérisé en ce qu'**un rayon (r₁) du contour s'agrandit à partir de la transition en forme de marche (10).

3. Moteur à réluctance selon la revendication 1 ou 2, **caractérisé en ce que** la différence de rayon (d) de la section en forme de spirale (8) est comprise entre un quart et trois quarts de la transition en forme de marche (10) augmenté de la différence de dimension des rayons (d).

4. Moteur à réluctance selon la revendication 1 ou 2, **caractérisé en ce que** la différence de rayon (d) correspond à un dixième jusqu'au double de la dimension (a) de la transition en forme de marche (10).
